Europäisches Patentamt

(19) European Patent Office

Office européen des brevets

(11) Numéro de publication: **0 005 093**

**B1**

(12) **FASCICULE DE BREVET EUROPEEN**

(21) Numéro de dépôt: 79400207.1

(22) Date de dépôt: 30.03.79

(51) Int. Cl.³: **H 04 B 9/00, H 04 J 1/00**

(54) Circuit optique intégré de démultiplexage et procédé de fabrication de ce circuit.

(30) Priorité: 25.04.78 FR 7812183

(43) Date de publication de la demande:
31.10.79 Bulletin 79/22

(45) Mention de la délivrance du brevet:
11.02.81 Bulletin 81/6

(84) Etats Contractants Désignés:
DE GB IT NL SE

(56) Documents cités:
US - A - 2 531 419
US - A - 3 908 121

THE BELL SYSTEM TECHNICAL JOURNAL vol.
48, n° 7, septembre 1969 New York
S. E. MILLER: "Integrated Optics: An
Introduction" pages 2059—2069

NATURE, vol. 261, n° 5559, 3 juin 1976, Londres
E. A. ASH et al.: "Integrated Optical Circuits for
Telecommunications" pages 377—381

"PROCEEDINGS OF THE NATIONAL
ELECTRONICS CONFERENCE", vol. 29, n° 29,
Octobre 1974 New York
T. G. GIALLORENZI: "Research in Fiber and
Integrated Optical Circuits", pages 376—380

APPLIED PHYSICS, vol 13, n° 3, juillet 1977
Berlin
J. P. NOBLANC: "Fiber Optical Communications
Devices" pages 211—223

APPLIED PHYSICS LETTERS, vol. 26, n° 10, 15
mai 1975 New York
W. E. MARTIN: "A new Waveguide/Switch
Modulator for Integrated Optics" pages
562—564

IEEE JOURNAL OF QUANTUM ELECTRONICS vol.
QE—8, n° 2, février 1972, New York
S. E. MILLER: "A Survey of Integrated Optics",
pages 199—205

(73) Titulaire: "THOMSON-CSF"
173, Boulevard Haussmann
F-75360 Paris Cedex 08 (FR)

(72) Inventeur: Papuchon, Michel
"THOMSON-CSF" - SCPI 173, Bld Haussmann
F-75360 Paris Cedex 08 (FR)
(72) Inventeur: Puech, Claude
"THOMSON-CSF" - SCPI 173, bld Haussmann
F-75360 Paris Cedex 08 (FR)

(74) Mandataire: Wang, Pierre et al,
"THOMSON-CSF" - SCPI 173, bld. Haussmann
F-75360 Paris Cedex 08 (FR)

## Circuit optique intégré de démultiplexage
## et procédé de fabrication de ce circuit

L'invention se rapporte à un circuit optique intégré pour le démultiplexage d'un signal composé de plusieurs porteuses optiques de différentes longueurs d'onde et est destiné particulièrement au domaine des télécommunications optiques.

Dans les télécommunications optiques, il est possible d'envisager la transmission simultanée de plusieurs signaux d'informations par voie optique, dans un cable optique, en utilisant pour chacun des signaux une porteuse optique de longueur d'onde déterminée. A la réception, il est alors nécessaire de démultiplexer les signaux en séparant les composantes les unes des autres.

Un dispositif de multiplexage en optique intégré est décrit dans le brevet US - A - 3,908,121 au nom de RISEBERG et al, publié le 23 septembre 1975. Ce dispositif comprend une source de lumière intégrée répartie uniformément dans plusieurs guides d'onde optiques, dans lesquels se trouvent des résonateurs à réseau. La lumière filtrée par transmission à travers les réseaux est modulée et finalement la lumière se propageant dans tous les guides est recombinée dans ce guide de sortie.

Il est connu de filtrer la lumière dans des guides optiques par des réseaux en réflexion. De tels filtres sont décrits notamment dans un article de S. E. MILLER dans le Bell System Technical Journal, volume 48 (1969) p. 2059 et dans un article de E. A. ASH et al dans le journal NATURE, volume 261 (1976), p. 377.

Par ailleurs, il est connu de commander électriquement un coupleur directif en optique intégrée par un article de W. E. MARTIN dans Applied Physics Letters, volume 26 (1975), p. 562.

Le dispositif suivant l'invention, permet un démultiplexage de signaux optiques en optique intégrée par l'utilisation de réseaux en reflexion et de coupleurs commandés; ses principales qualités sont sa compacité et sa facilité d'utilisation du fait de sa structure intégrée et son efficacité, la séparation des porteuses de différentes longueurs d'onde étant obtenue avec peu de diaphonie.

Suivante l'invention, un circuit intégré de démultiplexage destiné à recevoir un signal optique composé de plusieurs ondes optiques de longueurs d'onde différentes et à fournir les différentes ondes sur des sorties séparées, est caractérisé en ce qu'il comporte au moins une cellule de base comportant, intégrés sur le même support, un coupleur directionnel ayant une voie d'entrée, deux voies de sortie pour le rayonnement en sens direct et une voie de sortie pour le rayonnement en sens inverse et, deux guides prolongeant les deux voies de sortie directes sur chacun desquels a été prévu un réseau réflecteur pour une onde de longueur d'onde déterminée, les deux guides étant réunis pour former un guide unique de sortie, les chemins optiques entre les voies de sortie directes et les réseaux étant différents et ajustés pour que, le coupleur ayant divisé le rayonnement incident par moitié entre les deux voies de sortie directes, les deux moitiés du rayonnement réfléchies par les réseaux entrent dans le coupleur en opposition de phase et se recombinent pour émerger dans la voie de sortie inverse.

L'invention sera mieux comprise et d'autres caractéristiques apparaîtront à l'aide de la description qui suit en référence aux figures annexées.

La figure 1 représente un mode de réalisation de la cellule de base du circuit optique intégré de démultiplexage suivant l'invention.

Les figures 2 et 3 représentent des copues suivant AB et CD de la cellule représentée sur la figure 1.

La figure 4 représente un exemple de circuit comportant 6 cellules de base pour le démultiplexage de 7 porteuses optiques.

Le circuit optique intégré de démultiplexage selon l'invention est prévu pour séparer plusieurs porteuses optiques de longueurs d'onde distinctes préalablement multiplexées et transmises par l'intermédiaire d'un canal fibre optique. Ce canal et les guides optiques intégrés pour former le circuit de démultiplexage sont de préférence monomode.

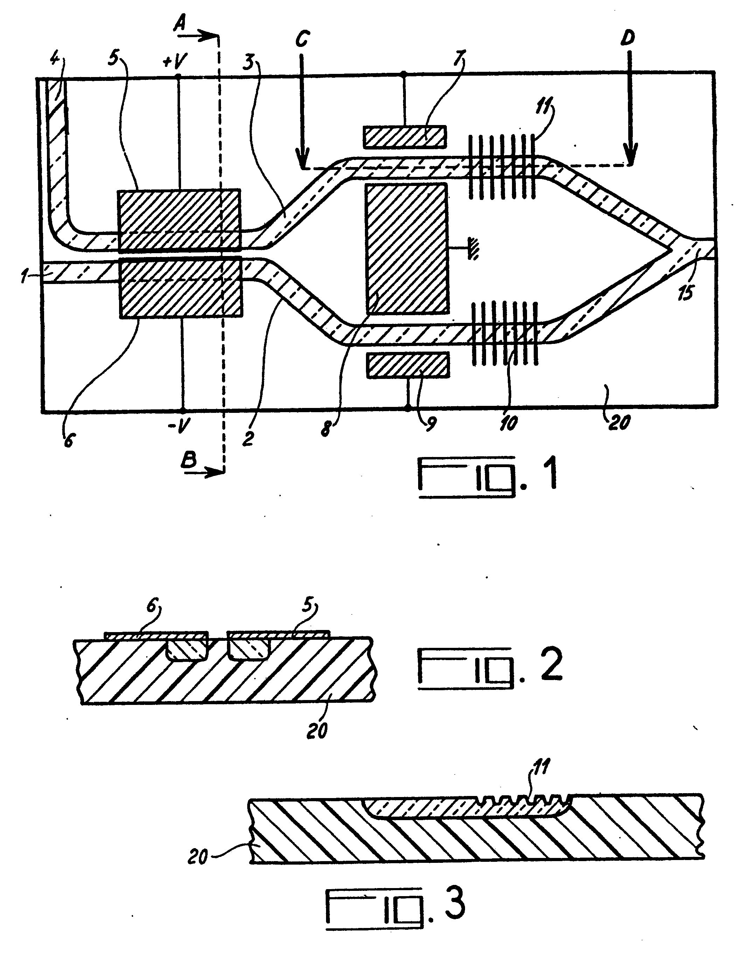

La description qui suit d'un mode de réalisation du circuit sera donnée en référence aux figures 1, 2 et 3.

La figure 1 représente, en plan, un exemple d'une cellule de base du circuit optique intégré de démultiplexage. Ce circuit est formé sur une plaquette 20 qui peut être par exemple une plaquette de niobate de lithium dans laquelle les guides d'ondes sont réalisés par diffusion de titane ou une plaquette de tantalate de lithium dans laquelle les guides d'ondes sont réalisés par diffusion de Niobium. En effet les guides dans de tels matéraux présentent des pertes optiques faibles (de l'ordre de ou inférieures à 1 dB/m) et la technique de diffusion par masquage dans de tels matériaux est maîtrisée.

Les guides d'onde réalisés dans la plaquette sont tels qu'ils forment successivement un coupleur directionnel, deux branches de guide parallèles et deux branches convergeant vers une branche unique de sortie. Le coupleur directionnel, qui comporte quatre voies 1, 2, 3 et 4, est utilisé comme séparateur pour l'onde incidente reçue par la voie 1 et comme mélangeur pour les ondes de retour, c'est-à-dire que la longueur L de la zone d'intéraction dans laquelle il y a échange d'énergie entre les deux guides est choisie pour que l'énergie entrant par la voie 1 soit partagée également entre les voies 2 et 3. Au retour, suivant le déphasage entre les ondes provenant des voies 2 et 3, l'énergie lumineuse émergera de l'une et/ou l'autre des voies 1 et 4. En particulier, si les ondes de retour entrant par les voies 2 et 3 ont même amplitude et sont en opposition de phase, toute l'énergie de retour est recueillie sur la voie 4.

Pour cela le coupleur comporte, associées aux deux branches de guide proches et parallèles, deux électrodes 5 et 6 permettant, par réglage du champ électrique transversal appliqué aux guides, d'obtenir une séparation précise à 50% du rayonnement incident et une recombinaison dans la voie 4 des ondes réfléchies en opposition de phase. La figure 2 représente une coupe de circuit au niveau du coupleur.

Pour obtenir la condition d'opposition de phase des ondes de retour une déphaseur est prévu. Pour cela, les branches 2 et 3 du coupleur sont prolongées par deux branches de guides parallèles auxquelles un champ électrique est appliqué sur une certaine distance afin de faire varier la phase des ondes guidées. Pour cela des électrodes 7, 8 et 9 sont prévues. L'électrode centrale 8 est portée par exemple au potentiel 0 tandis que les électrodes latérales 7 et 9 sont portées à des potentiels opposés +V et −V. Ainsi des champs électriques transversaux opposés sont appliqués aux deux branches et créent des variations d'indice de sens contraire qui entrainent des variations en sens inverses de la constante de propagation des ondes guidées dans chacun des guides. Après une longueur 1 choisie, les ondes dans les deux branches de guide ont parcouru des chemins optiques différents. Le champ électrique est réglé pour la différence de marche des deux ondes réfléchies dans le coupleur soit égale à

$$(2k+1) \ \frac{\lambda i}{2} \ \text{(k entier)}.$$

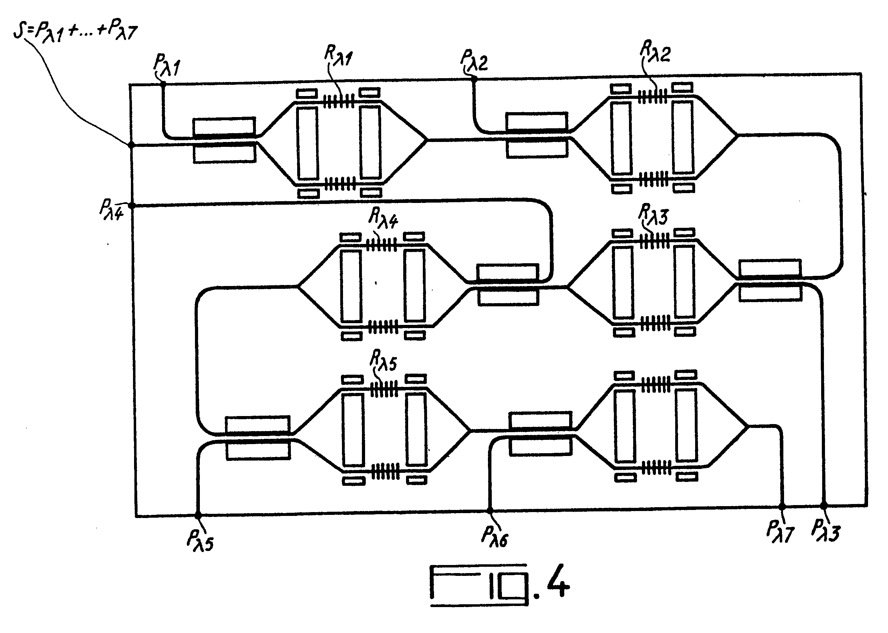

Des réseaux réflecteurs sélectifs 10 et 11 sont gravés sur chacune des branches de guide. Ces réseaux ont un pas $\Lambda_i$ fonction de la longueur d'onde à réfléchir, $\lambda_i$, les traits des réseaux orthogonaux aux guides étant distants de

$$\Lambda_i = \frac{\lambda i}{2n}$$

où n est l'indice du guide. La gravure de tels réseaux peut être effectuée par usinage ionique à travers un masque de résine photosensible; les traits sur le masque peuvent être obtenus par exemple par holographie. La figure 3 représente une coupe du circuit au niveau d'une réseau. Il est possible de réaliser des réseaux dont la sélectivité est de l'ordre de 3 Å. Pourvu que les porteuses optiques n'aient pas des longueurs d'onde trop proches (la différence entre leurs longueurs n'étant pas inférieure à 10 Å par exemple), les réseaux réfléchiront sélectivement la porteuse de longueur d'onde choisie et transmettront les autres sans les affecter. Les ondes réfléchies par chacun des réseaux parcourent au retour des chemins optiques qui diffèrent de

$$(2k+1) \ \frac{\lambda i}{2}$$

de telle maniére que les ondes de longueur d'onde $\lambda_i$, à l'entrée des voies 2 et 3 soient en opposition de phase et se combinent pour émerger par la voie 4 du coupleur.

Les autres porteuses optiques sont transmises par les réseaux. Un second déphaseur, analogue au premier mais créant des variations de phase inverses, peut être prévu entre le réseau et l'embranchement de sortie. Ce second déphaseur (non représenté sur la figure 1) permet alors de remettre en phase les deux parties des ondes transmises afin que le couplage dans le guide unique de sortie 15 puisse être effectuée avec une efficacité maximum.

Les électrodes des différents éléments actifs sont obtenues par évaporation de métal, or ou aluminium par exemple, et masquage.

Les éléments décrits ci-dessus forment la cellule de base du circuit de démultiplexage suivant l'invention. Il est possible d'intégrer sur une même plaquette (n−1) cellules telles que celle décrite afin de démultiplexer n porteuses optiques de longueurs d'onde distinctes.

La figure 4 représente un exemple de circuit à 6 cellules de base pour le démultiplexage de 7 porteuses optiques $P\lambda_1 \ldots P\lambda_7$ de longueurs d'onde distinctes, $\lambda_1 \ldots \lambda_7$. Cet exemple de réalisation est donné à titre d'exemple non limitatif. Les dimensions d'une cellule de base étant de l'ordre du centimètre, le nombre de proteuses susceptibles d'être démultiplexées est fonction de la longueur des guides susceptibles d'être intégrés sur le support; l'intégration peut être effectuée suivant une ligne moyenne en forme de serpentin comme représenté schématiquement sur la figure 3 où 6 cellules de démultiplexage consécutives ont été représentées. Chaque porteuse est réfléchie par des réseaux $R_{\lambda_i}$ (i = 1, … 6). Les fils d'alimenation des électrodes n'ont pas été représentés sur cette figure.

Dans de tels circuits le rayonnement est guidé dans des guides monomodes. Pour les matériaux tels que $LiNbO_3$ ou $LiTaO_3$, les guides ont des sections quasi rectangulaires d'environ 2 $\mu$m de large et 1 $\mu$m d'épaisseur. Il est également possible de réaliser des microguides de lumière dans d'autres matériaux, par exemple dans une résine d'indice convenable déposée sur un support d'indice également convenable, par exemple une résine telle que le PMMA (polyméthyle métacrylate) déposée sur un support de silice, dont l'indice de réfraction est susceptible de varier sous l'action d'un rayonnement lumineux. Dans de tels matériaux les guides optiques et les réseaux peuvent être obtenus par masquage et exposition directe à un rayonnement de longueur d'onde appropriée. les déphasages à introduire dans les deux voies de sortie du coupleur sont crées par variation supplémentaire d'indice sur des longueurs déterminées des guides.

L'invention n'est pas limitée au mode de réalisation de l'invention précisément décrit. En particulier il est possible d'utiliser un support semiconducteur, tel que AsGa ou InP, dans lequel les guides d'onde sont réalisés par dopage ou réalisation d'alliages ternaires ou quaternaires.

De tels supports conviennent pour transmettre des porteuses optiques de longueurs d'onde du domaine infrarouge, par exemple autour de 1,15 $\mu$m pour l'AsGa, et ont des pertes un peu supérieures à celles mesurées dans les guides formés sur des supports tels que $LiNbO_3$ ou $LiTaO_3$. Ces matériaux étant électro-optiques, les variations d'indice nécessaires peuvent être obtenues par application d'un champ électrique au guide. De plus il est possible dans de tels supports de former des jonctions détectrices pour recueillir à chaque sortie les porteuses optiques séparées.

De plus au lieu du coupleur directionnel du type COBRA (commutateur optique Binaire rapide) représenté sur les figures il est possible d'utiliser un coupleur ayant quatre bras monomodes reliés par une branche multimode.

Enfin pour réaliser la condition d'opposition de phase des ondes réfléchies par les réseaux à l'entrée du coupleur, des déphaseurs utilisant l'effet de biréfringence induite par champ électrique ont été décrits précédement; cette disposition n'est pas limitative et il est possible d'obtenir l'opposition de phase des ondes réfléchies à l'entrée du coupleur par exemple en réalisant des chemins optiques de différentes longueurs, entre les sorties du coupleur et les réseaux, par des longueurs de guides différentes.

Le dispositif décrit ci-dessus peut être perfectionné par l'adjonction d'un moyen d'ajustage de la fréquence réfléchie par les réseaux. Pour cela, deux électrodes sont disposées de part et d'autre du guide d'onde au niveau de chaque réseau réflecteur. Une tension peut être appliquée entre ces deux électrodes pour modifier par effet électro-optique l'indice du guide. Une telle disposition permet d'ajuster la fréquence $\lambda i = 2n\Lambda_i$ lorsque le pas $\Lambda_i$ a été fixé, dans un intervalle de 3 à 4 Å de manière à pallier des défauts intervenus par exemple lors de la fabrication, dans la détermination du pas du réseau.

## Revendications

1. Circuit optique intégré de démultiplexage destiné à recevoir un signal optique composé de plusieurs ondes optiques de longueurs d'onde différentes et à fournir les différentes ondes sur des sorties séparées, caractérisé en ce qu'il comporte au moins une cellule de base comportant, intégrés sur le même support, un coupleur directionnel ayant une voie d'entrée, deux voies de sortie pour le rayonnement en sens direct et une voie de sortie pour le rayonnement en sens inverse, et deux guides prolongeant les deux voies de sortie directes sur chacun desquels a été prévu un réseau réflecteur pour une onde de longueur d'onde déterminée, les deux guides étant réunis pour former un guide unique de sortie, les chemins optiques entre les voies de sortie directes et les réseaux étant différents et ajustés pour que, le coupleur ayant divisé le rayonnement incident par moitié entre les deux voies de sortie directes, les deux moitiés du rayonnement réfléchies par les réseaux entrent dans le coupleur en opposition de phase et se recombinent pour émerger dans la voie de sortie inverse.

2. Circuit optique selon la revendication 1, caractérisé en ce que l'ajustement des chemins optiques est effectué au moyen d'au moins un déphaseur prévu sur au moins un des guides prolongeant les deux voies de sortie directes entre la sortie correspondante du coupleur et le réseau.

3. Circuit optique selon la revendication 2, caractérisé en ce qu'un déphaseur est prévu sur chacun des guides prolongeant les deux voies de sortie directes du coupleur, entre les sorties et les réseaux correspondants, les variations des chemins optiques étant opposées.

4. Circuit optique selon l'une quelconque des revendications 1 à 3, caractérisé en ce qu'un second déphaseur est prévu respectivement sur chacun des guides entre les réseaux et le guide unique de sortie, les déphasages introduits étant ajustés pour que le rayonnement non réfléchi par les réseaux soit couplé dans le guide de sortie avec une efficacité maximum.

5. Circuit optique selon l'une quelconque des revendications précédentes, caractérisé en ce que le support sur lequel est formé le circuit est un matériau du type à biréfringence électrique, $LiNbO_3$ ou $LiTaO_3$, dans lequel les guides d'ondes sont réalisés par diffusion métallique, l'ajustement du coupleur et l'ajustement des chemins optiques étant effectuées électriquement.

6. Circuit optique selon la revendication 1, caractérisé en ce que, pour le démultiplexage de n ondes optiques de longueurs d'onde $\lambda_1 \ldots \ldots \lambda_n$, le circuit comporte au moins $(n-1)$ cellules de base consécutives comportant chacune des réseaux de pas

$$\frac{\lambda i}{2n}$$

où n est l'indice du guide et $\lambda i$ la longueur

d'onde de l'onde à sélectionner par la cellule correspondante.

7. Procédé de fabrication d'un circuit optique selon l'une quelconque des revendications précédentes, caractérisé en ce que les réseaux sont gravés par usinage ionique à travers un masque de résine sur lequel un réseau de pas déterminé en fonction de la longueur d'onde de l'onde à extraire du signal, a été préalablement formé.

**Patentansprüche**

1. Optische integrierte Demultiplexierschaltung zum Empfangen eines aus mehreren optischen Wellen mit verschiedenen Wellenlängen zusammengesetzten Signals und zum Abgeben der verschiedenen Wellen an getrennten Ausgängen, dadurch gekennzeichnet, daß sie wenigstens eine Grundzelle enthält, die auf dem gleichen Träger integriert einen Richtkoppler aufweist, der mit einem Eingangskanal, zwei Ausgängskanälen für die Strahlung in der Vorwärtsrichtung und einem Ausgangskanal für die Strahlung in der Rückwärtsrichtung versehen ist, daß die Grundzelle ferner zwei die zwei Vorwärts-Ausgangskanäle verlängernde Wellenleiter aufweist, in denen jeweils ein für eine Welle mit vorbestimmter Wellenlänge reflektierendes Gitter angebracht ist und die zur Bildung eines einzigen Ausgangswellenleiters vereinigt sind, und daß die optischen Wege zwischen den Vorwärts-Ausgangskanälen und den Gittern verschieden und so eingestellt sind, daß nach der Aufteilung der einfallenden Strahlung in Hälften auf die beiden Vorwärts-Ausgangskanäle durch den Richtkoppler die zwei von den Gittern reflektierten Hälften der Strahlung in den Richtkoppler gegenphasig eintreten und sich vereinigen, so daß sie in den Rückwärts-Ausgangskanal austreten.

2. Optische Schaltung nach Anspruch 1, dadurch gekennzeichnet, daß die Einstellung der optischen Wege mit Hilfe wenigstens eines Phasenschiebers durchgeführt wird, der von wenigstens einem der die zwei Vorwärts-Ausgangskanäle verlängernden Wellenleiter zwischen dem entsprechenden Ausgang des Richtkopplers und dem Gitter vorgesehen ist.

3. Optische Schaltung nach Anspruch 2, dadurch gekennzeichnet, daß auf jeden der die zwei Vorwärts-Ausgangskanäle des Richtkopplers verlängernden Wellenleiter ein Phasenschieber zwischen den entsprechenden Ausgängen und den Gittern vorgesehen ist, wobei die Veränderungen der optischen Wege einander entgegengesetzt sind.

4. Optische Schaltung nach einem der Ansprüche 1 bis 3, dadurch gekennzeichnet, daß auf jedem der Wellenleiter zwischen den Gittern und dem einzigen Ausgangswellenleiter jeweils ein zweiter Phasenschieber vorgesehen ist, wobei die eingeführten Phasenverschiebungen so eingestellt sind, daß die von den Gittern nicht reflektierte Strahlung mit maxi-maler Wirksamkeit in den Ausgangswellen-leiter gekoppelt wird.

5. Optische Schaltung nach einem der vor-hergehenden Ansprüche, dadurch gekenn-zeichnet, daß der Träger, auf dem die Schaltung gebildet ist, aus einem elektrisch doppel-brechenden Material, $LiNbO_3$ oder $LiTaO_3$, be-steht, in dem die Wellenleiter durch Metalldiffusionen gebildet sind, wobei die Einstellung des Richtkopplers und die Einstellung der optischen Wege auf elektrische Weise bewirkt werden.

6. Optische Schaltung nach einem der vorhergehenden Ansprüche, dadurch gekennzeichnet, daß die Gitter mittels Ionenbearbeitung durch eine Harzmaske hindurch graviert werden, auf der zuvor ein Gitter mit einer in Abhängigkeit von der Wellenlänge der aus dem Signal her-auszunehmenden Welle bestimmten Gitter-konstante gebildet worden ist.

7. Optische Schaltung nach Anspruch 1, da-durch gekenzeichnet, daß zur Demulti-plexierung von n optischen Wellen mit den Wellenlängen $\lambda_1 \ldots \lambda_n$ die Schaltung mindestens (n − 1) aufeinanderfolgende Grundzellen enthält, die jeweils Gitter mit der Gitter-konstante $\lambda i/2n$ aufweisen, wobei n der Brechungsindex des Wellenleiters ist und $\lambda i$ die Wellenlänge der von der entsprechenden Grundzelle auszuwählenden Welle ist.

**Claims**

1. Optical integrated demultiplexer circuit for receiving a signal composed of a plurality of optical waves with different wavelengths and for emitting the various waves at separate outputs, characterised in that it comprises at least one basic cell which includes integrated on the same support a directional coupler which is provided with an input channel, two output channels for the radiation in the forward direction and output channel for the radiation in the reverse direction, and that the basic cell further comprises two waveguides which extend the two forward output channels and in each of which a grating reflecting for a wave of predetermined wavelength is disposed and which are combined to form a single output waveguide, and that the optical paths between the forward output channels and the gratings are different and are so set that after the division of the incident radiation in halves between the two forward output channels by the directional coupler the two halves of the radiation reflected by the gratings enter the directional coupler in opposite phase and combine so that they emerge into the reverse output channel.

2. Optical circuit according to claim 1, characterised in that the adjustment of the optical paths is carried out with the aid of at least one phase shifter which is provided at least on one of the two waveguides extending the two forward output channels between the corresponding output of the directional coupler and the grating.

3. Optical circuit according to claim 2, characterised in that on each of the waveguides extending the two forward output channels of the directional coupler a phase shifter is provided between the corresponding outputs and the gratings, the changes in the optical paths being opposite each other.

4. Optical circuit according to any one of claims 1 to 3, characterised in that on each of the waveguides between the gratings and the single output waveguide in each case a second phase shifter is provided, the phase displacements introduced being so set that the radiation not reflected by the gratings is coupled with maximum efficacy into the output waveguide.

5. Optical circuit according to any one of the preceding claims, characterised in that the support on which the circuit is formed consists of an electrically double-refractive material, $LiNbO_3$ or $LiTaO_3$, in which the waveguides are formed by metal diffusion, the adjustment of the directional coupler and the adjustment of the optical waveguides being effected electrically.

6. Optical circuit according to any one of the preceding claims, characterised in that the gratings are engraved by means of ion working through a resin mask on which previously a grating has been formed with a grating constant determined in dependence upon the wavelength of the wave to be extracted from the signal.

7. Optical circuit according to claim 1, characterised in that for demultiplexing n optical waves with the wavelengths $\lambda_1 \ldots \lambda_n$ the circuit contains at least (n − 1) successive basic cells which each have gratings with the grating constant $\lambda i/2n$, where n is the refractive index of the waveguide and $\lambda i$ the wavelength of the wave to be selected by the corresponding basic cell.

FIG. 1

FIG. 2

FIG. 3

$S=P_{\lambda 1}+...+P_{\lambda 7}$

$P_{\lambda 1}$     $R_{\lambda 1}$     $P_{\lambda 2}$     $R_{\lambda 2}$

$P_{\lambda 4}$

$R_{\lambda 4}$     $R_{\lambda 3}$

$R_{\lambda 5}$

$P_{\lambda 5}$     $P_{\lambda 6}$     $P_{\lambda 7}$   $P_{\lambda 3}$

Fig.4

0 005 093